# EUROPÄISCHE PATENTSCHRIFT

(11) **EP 1 327 562 B1**
(45) Veröffentlichungstag und Bekanntmachung des Hinweises auf die Patenterteilung: **05.01.2005**
(21) Anmeldenummer: 02025469.4
(22) Anmeldetag: 15.11.2002
(51) Int. Cl.: B60R 7/04, B60N 3/00

(54) **Vorrichtung zur Aufbewahrung und Ablage von Gegenständen für ein Kraftfahrzeug**
Device for the storage and deposition of articles for a motor vehicle
Dispositif pour ranger et déposer des articles pour un véhicule à moteur

(30) Priorität: 10.01.2002 DE 10200631
(43) Veröffentlichungstag der Anmeldung: 16.07.2003
(73) Patentinhaber: DaimlerChrysler AG, 70567 Stuttgart (DE)
(72) Erfinder: Bihaule, Bernd, 71134 Aidlingen (DE); Lindemann, Peter, 71120 Grafenau (DE)

(56) Entgegenhaltungen:
- EP-A- 0 190 716
- DE-A- 19 822 700
- DE-C- 4 237 855
- DE-U- 29 603 294
- PATENT ABSTRACTS OF JAPAN vol. 1997, no. 05, 30. Mai 1997 (1997-05-30) -& JP 09 011786 A (TOYOTA AUTO BODY CO LTD), 14. Januar 1997 (1997-01-14)

## Beschreibung

Die Erfindung betrifft eine Vorrichtung zur Aufbewahrung und Ablage von Gegenständen für ein Kraftfahrzeug, insbesondere für einen Tunnelbereich zwischen einem Fahrer- und Beifahrersitz in einem Lastkraftwagen.

Die JP-A-09011786 zeigt eine Vorrichtung zur Ablage von Gegenständen für ein Kraftfahrzeug, insbesondere für einen Tunnelbereich zwischen einem Fahrer- und Beifahrersitz, mit einem in Führungsmitteln gehaltenen, verschieblichen Aufnahmebehälter und einer Tischplatte, welche in einer Nicht-Gebrauchsstellung in dem Aufnahmebehälter in wenigstens annähernd in senkrechter Richtung verlaufenden Tischplatten-Führungsmitteln gelagert ist, wobei die Tischplatte durch Bewegen entlang der Tischplatten-Führungsmittel und Kippen um eine im wesentlichen horizontal verlaufende Achse in eine Gebrauchsstellung schwenkbar ist, in welcher die Tischplatte im wesentlichen horizontal ausgerichtet ist.

Aus der DE 35 01 714 A1 ist eine Ablageanordnung für Kraftfahrzeuge bekannt, welche mehrere in Längsrichtung des Kraftfahrzeugs verschiebliche Ablagen aufweist.

Die DE 198 22 694 A1 beschreibt einen verstaubaren Klapptisch mit einer Tischplatte, die aus einer Verstaustellung mit vertikaler Tischoberfläche in eine Gebrauchsstellung mit horizontaler Tischoberfläche bewegbar ist.

Ein diese beiden Einrichtungselemente verbindender Nachteil ist deren geringe Flexibilität, was gerade in lativ zu einem Fahrzeugsitz bringen läßt, bei Nichtgebrauch jedoch auf kleinstem Raum, nämlich innerhalb des Stauraums an dem Aufnahmebehälter verstaut werden kann. Bei der Benutzung ist die Tischplatte dann ohne zusätzliche Stützelemente nutzbar.

Durch die Tischplatte selbst entsteht eine zusätzliche Ablagemöglichkeit, die der erfindungsgemäßen Vorrichtung zur Aufbewahrung und Ablage von Gegenständen eine höhere Flexibilität verleiht. Dabei behindert die Tischplatte durch ihre Unterbringung in dem Stauraum den Zugang zu dem Aufnahmebehälter nicht, so daß in demselben abgelegte Gegenstände in sehr einfacher Weise erreicht werden können.

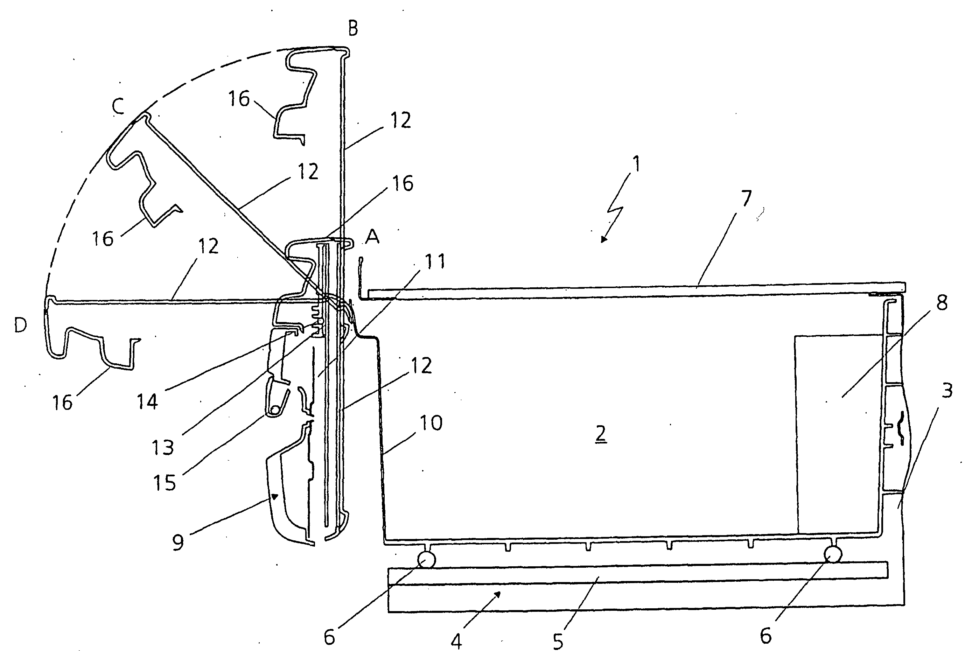

Vorteilhafte Ausgestaltungen und Weiterbildungen der Erfindung ergeben sich aus den Unteransprüchen sowie aus dem nachfolgend anhand der Zeichnung prinzipmäßig dargestellten Ausführungsbeispiel.

Die einzige Figur zeigt eine erfindungsgemäße Vorrichtung zur Aufbewahrung und Ablage von Gegenständen im Schnitt.

Eine Vorrichtung 1 zur Aufbewahrung und Ablage von Gegenständen für ein Kraftfahrzeug, im vorliegenden Fall für einen nicht dargestellten Tunnelbereich zwischen einem Fahrer- und Beifahrersitz in einem Lastkraftwagen, weist einen Aufnahmebehälter 2 auf, in welchem eine ebenfalls nicht dargestellte Bedienperson, beispielsweise der Fahrer des Kraftfahrzeugs, verschiedenste Gegenstände unterbringen kann. Der Aufnahmebehälter 2 ist in der Art einer Schublade ausgeführt und in einem Gehäuse 3 über Führungsmittel 4 verschieblich Kraftfahrzeugen den Benutzer oftmals vor erhebliche Probleme stellt.

Es ist Aufgabe der vorliegenden Erfindung, eine Vorrichtung zur Aufbewahrung und Ablage von Gegenständen für ein Kraftfahrzeug zu schaffen, welche einer Bedienperson, also meist einem Fahrer, eine möglichst einfache Bedienung bei zugleich größtmöglicher Flexibilität bietet.

Erfindungsgemäß wird diese Aufgabe durch die in Anspruch 1 genannten Merkmale gelöst.

Durch die erfindungsgemäßen Führungsmittel kann der Aufnahmebehälter der erfindungsgemäßen Vorrichtung zur Aufbewahrung und Ablage von Gegenständen von der Bedienperson in der Art einer Schublade verschoben werden, wodurch die Bedienperson in der Lage ist, den Aufnahmebehälter in eine von ihm gewünschte Position zu bringen. Bei dieser Verschiebung kann die Tischplatte vorteilhafterweise in ihrem Stauraum verbleiben, wodurch sie keinen zusätzlichen Raum beansprucht, und braucht erst bei Bedarf durch einfaches Hochziehen und Umklappen bzw. Kippen in ihre Gebrauchsstellung gebracht werden.

Es entsteht auf diese Weise also eine ergonomisch optimierte Vorrichtung zur Aufbewahrung und Ablage von Gegenständen, die für die Bedienperson, meist den Fahrer des Kraftfahrzeugs, viele verschiedene Möglichkeiten zur Unterbringung bzw. Ablage von Gegenständen bietet. Besonders vorteilhaft ist, daß sich die Tischplatte durch das Verschieben des Aufnahmebehälters, an dem sie angeordnet ist, in eine optimale Position regelagert.

Die Führungsmittel 4, welche eine Verschiebung des Aufnahmebehälters 2 gegenüber den fest mit dem Kraftfahrzeug verbundenen Gehäuse 3 ermöglichen, weisen im vorliegenden Fall zwei Führungsschienen 5, die fest mit dem Gehäuse 3 verbunden sind und von denen lediglich eine dargestellt ist, sowie mehrere an dem Aufnahmebehälter 2 angebrachte Räder 6 auf. Statt der auf den Führungsschienen 5 abrollenden Räder 6 sind selbstverständlich auch völlig andersartige Elemente denkbar, die eine Verschiebung des Aufnahmebehälters 2 gegenüber dem Gehäuse 3 erlauben, wie z.B. in eine U-förmige Führungsschiene 5 eingreifende Führungen oder dergleichen.

An seiner Oberseite ist das Gehäuse 3 mit einem den Aufnahmebehälter 2 abdeckenden Deckel 7 versehen, welcher beispielsweise als Liege für den Fahrer des Kraftfahrzeugs benutzt werden kann. Durch Herausziehen des Aufnahmebehälters 2 aus dem Gehäuse 3 ist der Aufnahmebehälter 2 also von oben her zugänglich und kann be- bzw. entladen werden. In dem Aufnahmebehälter 2 befindet sich ein Müllbehälter 8, welcher zur Aufnahme von Abfall oder dergleichen vorgesehen ist. Selbstverständlich können in dem Aufnahmebehälter 2 auch noch andere, nicht dargestellte Behälter vorgesehen sein.

An der der Bedienperson zugewandten Seite des Aufnahmebehälters 2 befindet sich eine Abdeckung 9, welche einen gewissen Abstand von einer vorderen Wandung 10 des Aufnahmebehälters 2 aufweist, so daß sich in diesem Bereich ein Stauraum 11 bildet. In diesem Stauraum 11 ist eine Tischplatte 12 in ihrer Nicht-Gebrauchsstellung angeordnet und in Tischplatten-Führungsmitteln 13, welche im wesentlichen in senkrechter Richtung verlaufen, geführt. Wenn der Aufnahmebehälter 2 aus dem Gehäuse 3 herausgefahren wird, so bewegt sich die in den Stauraum 11 angeordnete Tischplatte 12 in gleicher Richtung, also zu der Bedienperson hin. Die Tischplatten- Führungsmittel 13 können dabei durch die verschiedensten, an sich bekannten Elemente gebildet werden, die eine Verschieben der Tischplatte 12 relativ zu dem Aufnahmebehälter 2 erlauben.

Durch Bewegen entlang der Tischplatten-Führungsmittel 13 und Kippen um eine im wesentlichen horizontal verlaufende Achse 14 kann die Tischplatte 12 in eine Gebrauchsstellung geschwenkt werden, in welcher die Tischplatte 12 im wesentlichen horizontal ausgerichtet ist.

Die Darstellung zeigt die Tischplatte 12 in vier verschiedenen Positionen, die mit A, B, C und D bezeichnet sind, wobei die Position A die Tischplatte 12 in ihrer Nicht-Gebrauchsstellung, also in senkrechter Ausrichtung in dem Stauraum 11 zeigt. Die Position B zeigt die Tischplatte 12 in einer vollständig aus den Tischplatten-Führungsmitteln 13 herausgezogenen Stellung, die Position C zeigt eine Zwischenstellung der Tischplatte 12 und die Position D zeigt die Gebrauchsstellung der Tischplatte 12, in welcher diese im wesentlichen horizontal ausgerichtet ist. In dieser Position sind keine zusätzlichen Elemente notwendig, um ein sicheres Halten der Tischplatte 12 zu gewährleisten, da dieselbe gegenüber der Abdeckung 9 einrastet.

Um ein versehentliches Lösen der Tischplatte 12 zu vermeiden bzw. ein Klappern der selben während der Fahrt zu verhindern, ist die Tischplatte 12 über eine lösbare Verriegelungseinrichtung 15 mit der Abdeckung 9 verbunden, welche von an sich bekannter Bauart sein kann und welche vor dem Entnehmen der Tischplatte 12 aus dem Stauraum 11 gelöst werden muß.

Die Tischplatte 12 weist eine Abdeckung 16 auf, welche in senkrechter Stellung der Tischplatte 12 in Richtung der Bedienperson und in waagrechter Stellung der Tischplatte 12 nach unten zeigt und dazu dient, den Stauraum 11 von seiner Ober- und Vorderseite her geschlossen zu gestalten.

Die Bedienperson hat mittels der beschriebenen Vorrichtung 1 die Möglichkeit, durch Herausziehen des Aufnahmebehälters 2 aus dem Gehäuse 3 die Tischplatte 12 in ihre Richtung zu bewegen und dieselbe anschließend aus dem Stauraum 11 zu entnehmen.

## Patentansprüche

1. Vorrichtung zur Aufbewahrung und Ablage von Gegenständen für ein Kraftfahrzeug, insbesondere für einen Tunnelbereich zwischen einem Fahrer- und Beifahrersitz in einem Lastkraftwagen, mit folgenden Merkmalen:
1.1 einem in Führungsmitteln (4) gehaltenen, verschieblichen Aufnahmebehälter (2);
1.2 einer an einer einer Bedienperson zugewandten Seite des Aufnahmebehälters (2) angeordneten Abdeckung (9), welche gemeinsam mit einer vorderen Wandung (10) des Aufnahmebehälters (2) einen Stauraum (11) bildet;
1.3 einer Tischplatte (12), welche in einer Nicht-Gebrauchsstellung in dem Stauraum (11) in wenigstens annähernd in senkrechter Richtung verlaufenden Tischplatten-Führungsmitteln (13) gelagert ist;
1.4 die Tischplatte (12) ist durch Bewegen entlang der Tischplatten-Führungsmittel (13) und Kippen um eine im wesentlichen horizontal verlaufende Achse (14) in eine Gebrauchsstellung schwenkbar, in welcher die Tischplatte (12) im wesentlichen horizontal ausgerichtet ist.

2. Vorrichtung nach Anspruch 1,
**dadurch gekennzeichnet, daß**
der Aufnahmebehälter (2) in einem Gehäuse (3) angeordnet ist.

3. Vorrichtung nach Anspruch 2,
**dadurch gekennzeichnet, daß**
das Gehäuse (3) starr mit dem Kraftfahrzeug verbunden ist.

4. Vorrichtung nach einem der Ansprüche 1, 2 oder 3,
**dadurch gekennzeichnet, daß**
in dem Aufnahmebehälter (2) ein Müllbehälter (8) angeordnet ist.

5. Vorrichtung nach einem der Ansprüche 1 bis 4,
**dadurch gekennzeichnet, daß**
die Tischplatte (12) über eine lösbare Verriegelungseinrichtung (15) mit den Tischplatten-Führungsmitteln (13) verbunden ist.

## Claims

1. A device for the depositing and storage of objets for a motor vehicle, in particular for a tunnel area between a driver's and a front passenger's seat in a truck, having the following features:
1.1 a sliding receptacle (2) held in guide means (4);
1.2 a cover (9) positioned on a side of the receptacle (2) facing an operating person, which together with a front wall (10) of the receptacle (2), forms a stowage space (11);
1.3 a tabletop (12) which in a non-usable position is mounted in the stowage space (11) in at least approximately vertically running tabletop guide means (13);
1.4 the tabletop (12) can be pivoted into a usable position in which the tabletop (12) is oriented essentially horizontally by moving it along the tabletop guide means (13) and tipping it about an essentially horizontal running axis (14).

2. A device in accordance with claim 1,
**characterised in that**
the receptacle (2) in positioned in a housing (3).

3. A device in accordance with claim 2,
**characterised in that**
the housing (3) is connected rigidly to the motor vehicle.

4. A device in accordance with one of claims 1, 2 or 3,
**characterised in that**
a refuse container (8) is positioned in the receptacle (2).

5. A device in accordance with one of claims 1 to 4,
**characterised in that**
the tabletop (12) is connected to the tabletop guide means (13) by means of a detachable locking device (15).

## Revendications

1. Dispositif pour ranger et déposer des objets pour un véhicule automobile, en particulier pour une zone de tunnel, entre un siège de conducteur et un siège de passager, dans un camion, présentant les caractéristiques ci-après :
1.1 un récipient de logement (2) mobile, maintenu dans des moyens de guidage (4);
1.2 un couvercle (9), disposé sur une face, tournée vers un opérateur, du récipient de rangement (2), couvercle formant, conjointement avec une paroi avant (10) du récipient de rangement (2), un espace de rangement (11);
1.3 une plaque de table (12) qui, en une position de non-utilisation, est montée dans l'espace de rangement (11) dans des moyens de guidage de plaque de table (13), s'étendant au moins à peu près en direction verticale;
1.4 la plaque de table (12) est susceptible de pivoter, autour d'un axe (14) s'étendant sensiblement horizontalement, par un déplacement le long des moyens de guidage de plague de table (13) et par un basculement, pour passer en une position d'utilisation, à laquelle la plaque de table (12) est orientée sensiblement horizontalement.

2. Dispositif selon la revendication 1, **caractérisé en ce que** le récipient de rangement (2) est disposé dans un boîtier (3).

3. Dispositif selon la revendication 2, **caractérisé en ce que** le boîtier (3) est relié rigidement au véhicule automobile.

4. Dispositif selon l'une des revendications 1, 2 ou 3, **caractérisé en ce qu'**un récipient à déchets (8) est disposé dans le récipient de rangement (2).

5. Dispositif selon l'une des revendications 1 à 4, **caractérisé en ce que** la plaque de table (12) est reliée aux moyens de guidage de plaque de table (13), par l'intermédiaire d'un dispositif de verrouillage (15), désolidarisable.
